# EUROPÄISCHE PATENTSCHRIFT

(11) **EP 2 553 503 B1**
(45) Veröffentlichungstag und Bekanntmachung des Hinweises auf die Patenterteilung: **19.12.2018**
(21) Anmeldenummer: 10732637.3
(22) Anmeldetag: 31.03.2010
(51) Int. Cl.: G02B 3/00, B29D 11/00

(54) **VERFAHREN UND VORRICHTUNG ZUR HERSTELLUNG EINER MIKROLINSE**
METHOD AND DEVICE FOR PRODUCING A MICRO-LENS
PROCÉDÉ ET DISPOSITIF DE FABRICATION D'UNE MICROLENTILLE

(43) Veröffentlichungstag der Anmeldung: 06.02.2013
(60) Teilanmeldung: 18196563.3
(73) Patentinhaber: EV Group GmbH, 4782 St. Florian am Inn (AT)
(72) Erfinder: THALLNER, Erich, A-4782 St. Florian (AT); WIMPLINGER, Markus, 4910 Ried im Innkreis (AT); KAST, Michael, A-4600 Wels (AT)
(74) Vertreter: Schweiger, Johannes
(86) Internationale Anmeldenummer: PCT/EP2010/002065
(87) Internationale Veröffentlichungsnummer: WO 2011/120538

(56) Entgegenhaltungen:
- WO-A1-2010/033211
- JP-A- H04 326 301
- US-A1- 2003 197 293
- US-A1- 2008 290 435
- US-B1- 6 805 902
- US-B2- 6 814 901

## Beschreibung

Die vorliegende Erfindung betrifft ein Verfahren zur Herstellung einer Mikrolinse nach Anspruch 1.

Mikrolinsen finden in erster Linie Anwendung für Geräte, die eine optische Fokussiereinrichtung benötigen, wie beispielsweise für Kameras von Mobiltelefonen. Auf Grund des Miniaturisierungsdrucks sollen die funktionalen Bauteile immer kleiner werden, was auch für Mikrolinsen der gattungsgemäßen Art gilt. Je weiter die Mikrolinsen miniaturisiert werden sollen, desto schwieriger wird deren optisch korrekte Herstellung, weil gleichzeitig ein enormer Kostendruck für die idealerweise in Massenfertigung herzustellenden Mikrolinsen besteht.

Im Stand der Technik werden Mikrolinsen auf einem Trägersubstrat durch unterschiedliche Herstellverfahren erzeugt, wie beispielsweise in der US 6,846,137 B1, US 5,324,623, US 5,853,960 und US 5,871,888 gezeigt. Allen vorgenannten Verfahren ist gemein, dass prinzipbedingt eine gewisse Dicke notwendig ist und das durch die Mikrolinse durchtretende Licht nicht nur die Linse, sondern auch das Trägersubstrat passieren muss.

Auf Grund der gleichzeitig geforderten hohen Qualität und der Anforderungen an höhere Auflösung bei gleichzeitig höherer Brillanz, die unteren anderem von der Dicke und der Anzahl der Optiken entlang der optischen Achse, also des Strahlengangs, abhängt, ist eine weitere Optimierung der Mikrolinsen gemäß dem Stand der Technik wünschenswert.

Darüber hinaus besteht die Forderung nach einer möglichst hohen Lichtausbeute, die insbesondere für Mikrooptiksysteme entscheidend ist, da der Bildsensor eine meist sehr kleine Fläche einnimmt, auf die Licht auftrifft.

Die US 6,049,430 zeigt eine in einer Öffnung eines Trägersubstrats eingesetzte Linse, wobei der in Figur 2 gezeigte Herstellprozess eine Vielzahl von Schritten benötigt und daher aufwendig und wegen der hier erreichbaren Fertigungsgenauigkeiten für die oben genannten Anforderungen zu ungenau sein dürfte. Nachteilig ist auch die Vielzahl der zu verwendenden Materialien.

Weitere Herstellverfahren sind in der US 6814901 B2, der US 2008/290 435 B1, der WO 2010/033211 B1, der US 6805902 B1 und der JP H04326301 A gezeigt.

Der vorliegenden Erfindung liegt daher die Aufgabe zu Grunde, eine, insbesondere in Massenfertigung herstellbare, Mikrolinse mit möglichst hoher Lichtausbeute sowie hoher Brillanz anzugeben, die durch ein erfindungsgemäßes Verfahren und eine erfindungsgemäße Vorrichtung auf einfache, für die Massenfertigung geeignete Art und Weise mit flexibler Form herstellbar ist.

Diese Aufgabe wird mit den Merkmalen des Anspruchs 1 gelöst. Vorteilhafte Weiterbildungen der Erfindung sind in den Unteransprüchen angegeben. Bei angegebenen Wertebereichen sollen auch innerhalb der genannten Grenzen liegende Werte als Grenzwerte offenbart gelten und in beliebiger Kombination beanspruchbar sein.

Die Erfindung beruht auf dem Gedanken, eine Mikrolinse dadurch herzustellen, dass eine Linse direkt in einen Trägerwafer eingeformt wird, so dass der Trägerwafer den durch die Linse tretenden Lichtstrahl nicht behindert beziehungsweise außerhalb des Strahlengangs angeordnet ist. Somit wird die Linse von zwei Seiten des Trägerwafers durch einen oberen und unteren Linsenstempel geformt, so dass durch, insbesondere kolineare, Ausrichtung des oberen Linsenstempels zum unteren Linsenstempel und/oder zum Trägerwafer eine hochgenaue Mikrolinse herstellbar ist. Durch das Abweichen von der bisherigen Vorgehensweise im Stand der Technik wird erfindungsgemäß ermöglicht, die Linsenform flexibler zu gestalten, insbesondere im Bereich der bisher vom Trägerwafer belegten unteren Linsenseite.

### Die Linse ist demnach erfindungsgemäß formschlüssig mit dem Trägerwafer, insbesondere mit dem Innenring des Trägerwafers, verbunden.

Der starre Trägerwafer sorgt dabei für eine Formstabilität bei der Herstellung der Linse, da diese meist eine Ausdehnung/Schrumpfung der Linse mit sich bringt.

Insbesondere bei der durch das vorliegende Verfahren und die erfindungsgemäße Vorrichtung ermöglichte gleichzeitige Herstellen einer Vielzahl von Linsen mit einer Trägerwafermatrix und zwei Linsenstempelmatrizen gewährleistet der Trägerwafer außerdem die Integrität der optischen Achsen der Linsen zueinander. Die jeweiligen Gitterpositionen jedes korrespondierenden oberen und unteren Stempels sowie der korrespondierenden Öffnung des Trägerwafers können somit genau ausgerichtet werden, da der Trägerwafer nicht den Größenänderungen bei der Herstellung unterworfen ist. Mit einer Trägerwafermatrix und den zwei korrespondierenden Linsenstempelmatrizen können bei einem Trägerwaferdurchmesser von 200mm ca. 2000 Linsen mit einem erfindungsgemäßen Prozesslauf hergestellt werden.

Insbesondere ist dabei ein Mikrolinsennegativ an jedem Linsenstempel vorgesehen, dessen Form die Krümmung der jeweiligen Seite der mit dem erfindungsgemäßen Verfahren hergestellten Mikrolinse bestimmt. Die Form der Linsen kann konvex, planar oder konkav ausgeführt werden. Das Linsenprofil kann erfindungsgemäß sphärisch oder asphärisch sein.

Die Linse ist aus einem UV-härtbaren oder thermisch härtbaren Linsenmaterial gebildet, wobei einer der beiden Linsenstempel im Falle eines UV-härtbaren Linsenmaterials UV-lichtdurchlässig ausgebildet ist.

Das Linsenmaterial ist insbesondere zumindest überwiegend, vorzugsweise vollständig, lösungsmittelfrei und zur vollständigen Vernetzung geeignet.

Der erfindungsgemäß vorgesehene Trägerwafer, in welchen die Linse einformbar ist beziehungsweise eingeformt wird, dient zur Halterung und Fixierung der Linse in der erfindungsgemäß hergestellten Mikrolinse sowie insbesondere als Abstandhalter zwischen dem oberen und dem unteren Linsenstempel, so dass unter anderem die Dicke der Mikrolinse durch die Dicke des Trägerwafers beeinflusst wird. Der Trägerwafer kann mit Vorteil auch für die Herstellung einer Vielzahl von Mikrolinsen verwendet werden, indem in den Trägerwafer viele Linsen eingeformt werden, die später in einzelne Mikrolinsen geteilt werden. Soweit der Trägerwafer als Ring mit einer Öffnung zur Aufnahme der Linse ausgebildet ist, wird die Linse an ihrem gesamten Umfang von dem Trägerwafer gehalten und stabilisiert. Der Linsenring kann an seiner Ringinnenseite und/oder seiner Ringaußenseite quadratisch, halbkreisförmig, dreieckig, elliptisch ausgebildet sein, wobei am Innenring mit Vorteil eine Haltestruktur, insbesondere Vorsprünge, zur wirksameren Fixierung der Linse im Trägerwafer vorgesehen sind, vorzugsweise als Ausformungen des Trägerwafers, also einstückig mit dem Trägerwafer. Vorzugsweise überragen die Haltestrukturen die Ringinnenseite um mindestens ein Fünftel der Dicke des Trägerwafers. Alternativ ist die Haltestruktur als Oberflächenrauigkeit des Innenrings des Trägerwafers ausgebildet, an der das Linsenmaterial und die ausgehärtet Linse in Richtung der optischen Achse gehalten werden.

Zur Vermeidung von Thermodehnungen beziehungsweise Thermospannungen ist mit Vorteil vorgesehen, dass das Linsenmaterial und der Trägerwafer einen in etwa gleichgroßen thermischen Ausdehnungskoeffizienten aufweisen. Soweit die Linse und der Trägerwafer einen unterschiedlichen thermischen Ausdehnungskoeffizienten haben, wird die Linse erfindungsgemäß so ausgebildet, dass die Form der Linse bei unterschiedlichen Temperaturen im Wesentlichen skaliert, so dass die Linse bei unterschiedlichen Temperaturzuständen selbstähnlich ist und ihre optischen Eigenschaften kaum ändert. In diesem Fall ist es von Vorteil, wenn die Linse erfindungsgemäß einen größeren thermischen Ausdehnungskoeffizienten im ausgehärteten Zustand aufweist als der Trägerwafer. Auf diese Weise wird bei der Herstellung der Mikrolinse durch den größeren thermischen Ausdehnungskoeffizienten der Linse beim Abkühlen der Linse während der Herstellung ein minimaler Leerraum zwischen dem Trägerwafer und der Linse ausgebildet, der als Puffer für die Ausdehnung der Linse bei unterschiedlichen Temperaturen dient. Insbesondere kann bei der Herstellung der Mikrolinse, insbesondere bei einem UVaushärtenden Linsenmaterial eine Erwärmung beim Härten des Linsenmaterials vorgesehen sein, um den oben genannten Effekt zu erzielen.

Die Linsenstempel bestehen in vorteilhafter Ausführungsform aus einem Trägersubstrat und einem an dem Trägersubstrat fixierten Mikrolinsennegativ. Gemäß einer Ausführungsform des Linsenstempels ist mindestens ein Linsenstempel mit einem Abfluss für überschüssiges Linsenmaterial versehen.

Der Prozessablauf zur Herstellung der Mikrolinse ist vorzugsweise wie folgt:
Das Mikrolinsennegativ des unteren Linsenstempels wird fixiert, insbesondere durch Fixierung des Linsenstempels mittels einer Aufnahmeeinrichtung zur Aufnahme des unteren Linsenstempels. Anschließend wird der Trägerwafer so zum Mikrolinsennegativ des unteren Linsenstempels ausgerichtet/justiert, dass die optische Achse des Mikrolinsennegativs und die Längsmittelachse des Trägerwafers kolinear sind. Alternativ und insbesondere für die Herstellung von mehreren Linsen gleichzeitig mit einem Trägerwafer wird der Trägerwafer koplanar mit dem Trägersubstrat des unteren Linsenstempels justiert. Anschließend wird der Trägerwafer auf dem Trägersubstrat des Mikrolinsennegativs, also auf den Linsenstempel, abgelegt und fixiert. Die Fixierung ist durch Vakuumstrukturen im Linsenstempel oder elektrostatisch durch in den Linsenstempel eingearbeitete Elektrostatikmittel, aber auch mechanisch durch Klemmen und/oder Adhäsion denkbar.

Anschließend wird Linsenmaterial, insbesondere ein UV- oder thermoplastisch aushärtbares Polymer in die Öffnung des Trägerwafers über dem Mikrolinsennegativ des unteren Linsenstempels eingebracht, wobei die Viskosität des Linsematerials beim Einbringen derart gewählt wird, dass der durch den Innenring des Trägerwafers und den Linsenstempel gebildete Linsenraum blasenfrei ausfüllbar ist. Die Menge des eingebrachten Linsenmaterials ist derart bemessen, dass beim anschließenden Prägen der Linse ausreichend Linsenmaterial vorhanden ist, um das Mikrolinsennegativ des oberen Linsenstempels auszufüllen.

Das Einbringen erfolgt in einer alternativen Ausführungsform vollflächig auf dem Trägerwafer/der Trägerwafermatrix, wodurch die Öffnung(en) ausgefüllt wird/werden und überschüssiges beziehungsweise für den Trägerwafer überragende Linsenstrukturen benötigtes Linsenmaterial den Trägerwafer/die Trägerwafermatrix bedeckt.

Gemäß einer weiteren, alternativen Ausführungsform der Erfindung wird das Linsenmaterial einzeln in die Öffnung(en) des Trägerwafers/der Trägerwafermatrix eingefüllt, insbesondere durch Dosierung mit einem Tropfendispenser oder mit einer Pipette.

Anschließend wird die optische Achse des oberen Linsenstempels kolinear mit der optischen Achse des unteren Linsenstempels beziehungsweise des Linsennegativs des unteren Linsenstempels und/oder mit der Längsmittelachse des Trägerwafers justiert. Anschließend wird der obere Linsenstempel mit Druck auf den unteren Linsenstempel und den dazwischen angeordneten Trägerwafer gepresst. Im Falle der UV-Aushärtung wird das Linsenmaterial mittels UV-Licht mit genügend hoher Intensität durch den oberen Linsenstempel, der in diesem Fall transparent beziehungsweise UV-durchlässig ist, und/oder durch den unteren Linsenstempel bestrahlt und das Polymer vernetzt. Bei thermoplastischer Aushärtung ist das Material der Linsenstempel mit einer ausreichend hohen Wärmeleitfähigkeit ausgestattet, um den Wärmetransport zu begünstigen.

Die Ausrichtung der Linsenstempel mit dem Trägerwafer erfolgt durch eine Ausrichtungsmechanik, insbesondere mit einer Ausrichtungsgenauigkeit von weniger als 500µm, insbesondere weniger als 200µm, vorzugsweise weniger als 100µm, idealerweise weniger als 70µm Abweichung und/oder mit optischen Ausrichtungsmitteln mit einer Ausrichtungsgenauigkeit von weniger als 10µm, insbesondere weniger als 5µm, vorzugsweise weniger als 3µm Abweichung. Die optische Ausrichtung ist insbesondere für die Ausrichtung des oberen und unteren Linsenstempels beziehungsweise der oberen und unteren Linsenstempelmatrix vorteilhaft. Optikmittel sind insbesondere Laser oder Mikroskope, die durch Markierungen an den Linsenstempeln oder an den Linsenstempelmatrizen eine genaue Ausrichtung ermöglichen.

Gemäß einer besonders bevorzugten Ausführungsform der Erfindung erfolgt die Ausrichtung der Linsenstempel, insbesondere zusätzlich zu der Ausrichtung an dem Trägerwafer, durch paralleles Ausrichten der Linsenstempel zueinander, wobei auch die Position der optischen Achse(n) der Linsennegative berücksichtigt wird.

Indem beim Prägen Anlageflächen der Linsenstempel zur koplanaren Ausrichtung der Linsenstempel an korrespondierenden Gegenflächen des Trägerwafers anliegen, werden die Linsenstempel anhand der, insbesondere parallelen, gegenüberliegenden Gegenflächen des Trägerwafers ausgerichtet, wodurch die optischen Achsen der Linsennegative genau ausgerichtet werden. Beschreibungsgemäß parallel bedeutet eine Abweichung von weniger als 10µm über die Breite jeder Linse, die zwischen 100µm und 6mm liegt. Höchstens beträgt die Abweichung der Parallelität daher 10%, insbesondere weniger als 7%, vorzugsweise weniger als 5%, noch bevorzugter weniger als 3%, idealerweise weniger als 1,5%. Damit wird eine praktisch ideale Übereinstimmung der optischen Achsen ermöglicht. Die Höhe der Linsen liegt üblicherweise zwischen 50 und 500µm, wobei die Höhe bei der Mikrolinse im Vergleich zum Stand der Technik im Wesentlichen um die Breite des Trägerwafers reduziert werden kann.

Gemäß einer Ausführungsform der Erfindung ist an der Mikrolinse, insbesondere parallel zur optischen Achse der Linse, eine Selbstzentrierungsstruktur, insbesondere als Ausformung des Trägerwafers, vorgesehen, die beispielsweise zur selbsttätigen Ausrichtung der Mikrolinse mit einer weiteren Mikrolinse dient, die eine korrespondierende, invertierte Struktur aufweist, insbesondere in Form von Kodierrippen. Die Selbstausrichtung funktioniert nach dem Schlüssel-Schloss-Prinzip oder nach Art einer Nut-Feder-Verbindung. Besonders bevorzugt ist eine konusartige Ausgestaltung der Nut-Feder-Verbindung.

Die Beschreibung des Verfahrens und der Vorrichtung zur Herstellung einer einzigen Mikrolinse bezieht sich analog auf die Herstellung einer Vielzahl von Mikrolinsen mit der Besonderheit, dass diese erst durch die erfindungsgemäße Ausgestaltung ermöglicht wird. Statt eines oberen Linsenstempels wird eine obere Linsenstempelmatrix verwendet, die viele Linsenstempel, insbesondere als einstückige Linsenstempelstruktur, umfasst. Analog ist die untere Linsenstempelmatrix gebildet. Der Trägerwafer ist als Trägerwafermatrix, insbesondere in Form einer einstückigen Trägerwaferstruktur, mit einer Vielzahl von Öffnungen versehen.

Für die Beaufschlagung in der bevorzugten Alternative, bei der eine Ausrichtung der Linsenstempelmatrizen an Anlageflächen der Linsenstempelmatrizen erfolgt, ist die Trägerwafermatrix durchsetzbar von einem Abstandhalter der oberen und/oder unteren Linstenstempelmatrix, der jeweils die Anlagefläche bildet und die Dicke der Linse vorgibt.

Gemäß einer eigenständigen Ausführung der Erfindung wird der Trägerwafer nach der Herstellung der Mikrolinse zumindest teilweise, vorzugsweise vollständig entfernt. Dadurch werden die Abmessungen und das Gewicht der Linse weiter reduziert. Das Entfernen erfolgt vorzugsweise durch Ausstossen der Linse aus dem, insbesondere mit einer Haltestruktur mit geringfügigen Vorsprüngen versehenen, Trägerwafer erfolgen. Geringfügige Vorsprünge sind insbesondere als Oberflächenrauigkeit des Innenrings ausgestaltet.

Weitere Vorteile, Merkmale und Einzelheiten der Erfindung ergeben sich aus der nachfolgenden Beschreibung bevorzugter Ausführungsbeispiele sowie an Hand der Zeichnungen. Diese zeigen in:
- Fig. 1:: eine schematische Querschnittsansicht einer erfindungsgemäßen Mikrolinsenmatrix aus einer Vielzahl von einer in einer Trägerwaferstruktur eingeformten Linse,
- Fig. 2:: eine schematische Darstellung der erfindungsgemäßen Vorrichtung zur Herstellung einer erfindungsgemäßen Mikrolinse,
- Fig. 3:: eine schematische Darstellung einer erfindungsgemäßen Mikrolinsenmatrix aus einer Vielzahl von einer in einer Trägerwaferstruktur eingeformten Linse gemäß einer alternativen Ausführungsform,
- Fig. 4:: eine schematische Darstellung der erfindungsgemäßen Vorrichtung zur Herstellung einer erfindungsgemäßen Mikrolinse gemäß einer alternativen Ausführungsform,
- Fig. 5:: eine schematische Darstellung von erfindungsgemäßen Formen einer Haltestruktur und
- Fig. 6:: eine schematische Darstellung einer erfindungsgemäßen Vorrichtung zur Herstellung einer Vielzahl von Mikrolinsen.

In den Figuren sind gleiche Bauteile und Bauteile mit der gleichen Funktion mit den gleichen Bezugszeichen gekennzeichnet.

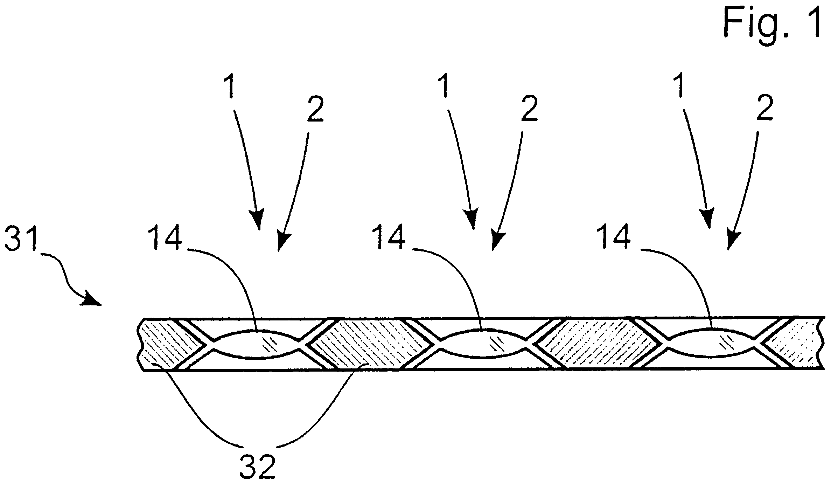

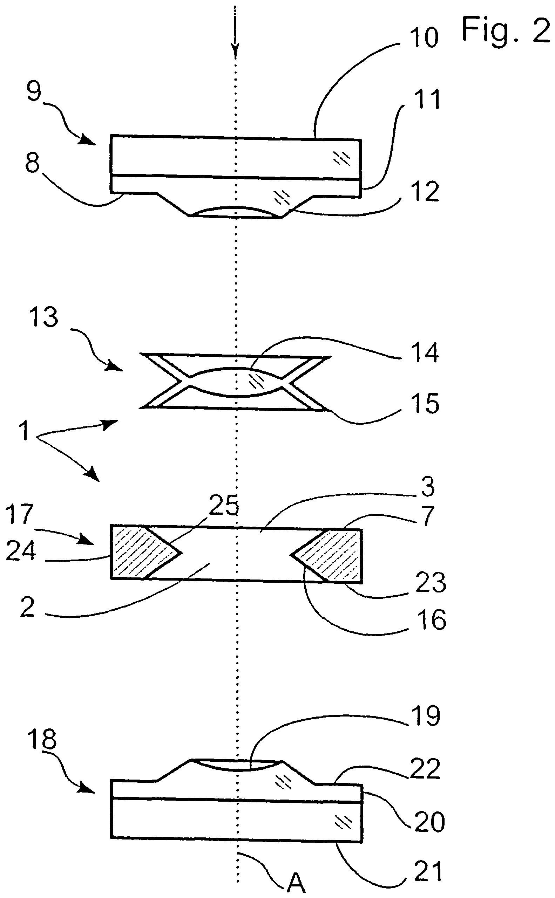

In der Figur 1 ist eine Mikrolinsenmatrix 31 im Querschnitt dargestellt, die aus einer Trägerwaferstruktur 32 und einer Vielzahl von in Öffnungen 2 der Trägerwaferstruktur 32 beziehungsweise der späteren Trägerwafer 17 eingeformten Linsen 14 besteht. Die Mikrolinsenmatrix 31 kann durch bekannte Trennverfahren in einzelne Mikrolinsen 1 getrennt werden, wie sie vereinzelt in Explosionsdarstellung in Figur 2 gezeigt ist.

Die Mikrolinsen 1 sind als Mikrolinsenmatrix 31 in Massenfertigung herstellbar, können aber auch einzeln erzeugt werden. In Figur 2 ist die Herstellung anhand einer einzelnen Mikrolinse 1 schematisch gezeigt.

Gemäß Figur 2 ist auf nicht dargestellten Aufnahmemitteln der erfindungsgemäßen Vorrichtung ein unterer Linsenstempel 18 aufnehmbar, der aus einem Trägersubstrat 21 und einer auf dem Trägersubstrat 21 fixierten, insbesondere aufgeklebten, Linsenform 20 besteht. Bei Massenfertigung können auf dem Trägersubstrat 21 eine Vielzahl von Linsenformen 20 beziehungsweise eine Linsenform 20 mit einer Vielzahl von Linsennegativen 19 vorgesehen sein, wobei die Linsennegative 19 beziehungsweise die Linsenformen 20 so auf dem Trägersubstrat 21 aufgebracht sind, dass sie fluchtend mit den in Figur 1 gezeigten Öffnungen 2 ausrichtbar sind.

Das Linsennegativ 19 ist von einer orthogonal zur optischen Achse des Linsennegativs 19 angeordneten Anlagefläche 22 umgeben, auf der der Trägerwafer 17 mit einer korrespondierenden, im vorliegenden Ausführungsbeispiel ringförmigen Gegenfläche 23 dichtend zur Anlage kommt.

Sobald der Trägerwafer 17, wie in Figur 2 gezeigt, mit seiner Längsmittelachse zu der optischen Achse A ausgerichtet ist, wird der Trägerwafer 17 mit seiner Gegenfläche 23 auf der Anlagefläche 22 fixiert, so dass ein Innenring 16 des Trägerwafers 17 und die Linsenform 20 einen Linsenraum 3 bilden, in welchen das die Linse 14 bildende Linsenmaterial über Einbringmittel einbringbar ist. Nach dem Einbringen des Linsenmaterials in den Linsenraum 3 wird die Linse 14 wie nachfolgend beschrieben geprägt.

Hierzu ist ein durch Aufnahmemittel zur Aufnahme eines oberen Linsenstempels 9 vorgesehener oberer Linsenstempel 9 durch Ausrichtungsmittel zur Ausrichtung des oberen Linsenstempels 9 mit der Öffnung 14 und/oder dem unteren Linsenstempel 18 ausrichtbar, und zwar zur optischen Achse A eines Linsennegativs 12 einer auf einem Trägersubstrat 10 aufgebrachten Linsenform 11. Der obere Linsenstempel 9 ist analog dem unteren Linsenstempel 18 gebildet und weist eine Anlagefläche 8 zur, insbesondere dichtenden, Anlage des oberen Linsenstempels 9 an einer Gegenfläche 7 des Trägerwafers 17 auf. Die Gegenfläche 7 ist gegenüberliegend zur Gegenfläche 23 und parallel zu dieser angeordnet.

Nach Ausrichtung des oberen Linsenstempels 9 wird der obere Linsenstempel 9 entlang der optischen Achse A auf den Trägerwafer 17 abgesenkt und mit Druck beaufschlagt, wobei über den unteren Linsenstempel 18 der entsprechende Gegendruck bewirkt wird. Das Linsenmaterial füllt den Linsenraum 3 blasenfrei aus und etwaiges überschüssiges Linsenmaterial kann über einen in den Figuren nicht dargestelltes Abflusssystem aus dem Linsenraum 3 abfließen oder abgesaugt werden.

Gemäß einer bevorzugten Ausführungsform der Erfindung ist das Linsenmaterial optimal beaufschlagbar, wenn durch Vakuummittel gleichzeitig ein Vakuum, insbesondere mit einem Druck <500mbar, vorzugsweise <300mbar, noch bevorzugter <200mbar, idealerweise <100mbar, in der Öffnung, insbesondere zwischen dem oberen Linsenstempel und dem Trägerwafer, angelegt wird.

Gemäß einer noch bevorzugteren Ausführungsform ist das Vakuum beim Beaufschlagen <70mbar, insbesondere <40mbar, vorzugsweise <15mbar, noch bevorzugter <5mbar.

Über Aushärtemittel der Vorrichtung wird das Linsenmaterial ausgehärtet, so dass eine harte Linse 14 entsteht, die der Form nach dem Linsenraum 3 entspricht. Die Aushärtemittel können eine Lichtquelle für UV-Licht bei UV-aushärtbarem Linsenmaterial oder Heizmittel bei thermoplastisch aushärtbarem Polymer als Linsenmaterial sein.

Indem der den Innenring 16 und einen Außenring 24 aufweisende Trägerwafer 17 eine Haltestruktur 25 in Form von einem beim gezeigten Ausführungsbeispiel gemäß Figur 2 spitz in Richtung der optischen Achse A vom Innenring 16 hervorstehenden Vorsprung aufweist, gehen die Linse 14 und der Trägerwafer 17 eine formschlüssige Verbindung ein, die nicht zerstörungsfrei lösbar ist.

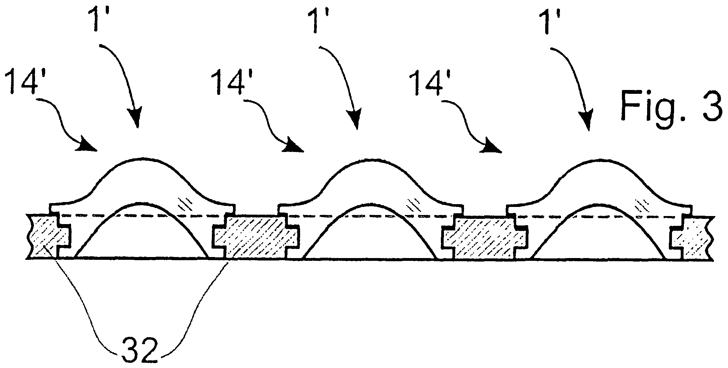

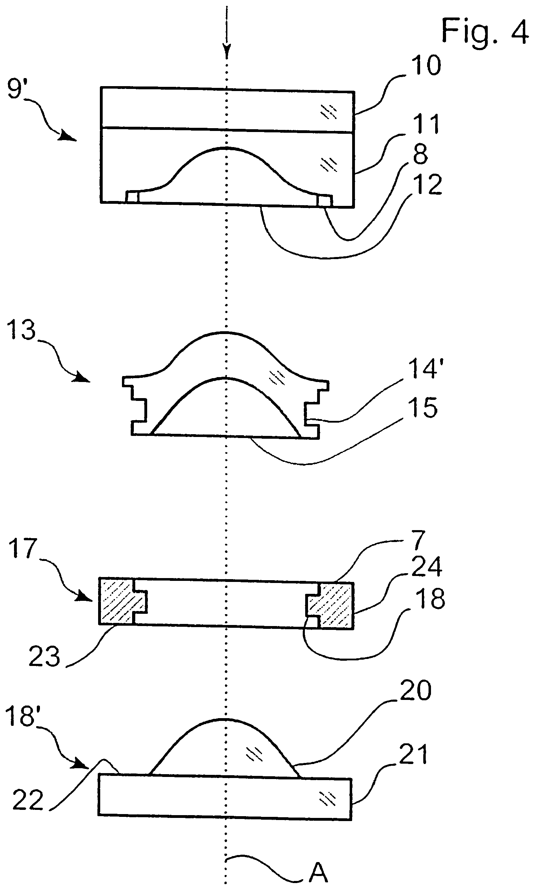

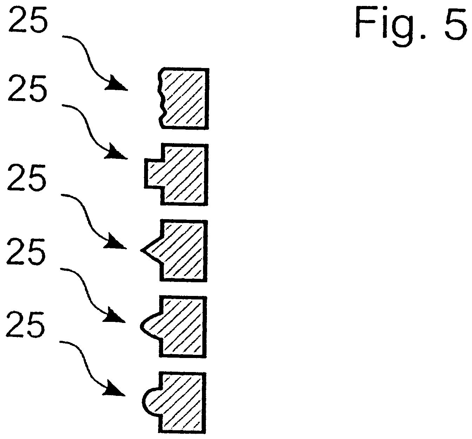

Alternative Formen der Haltestruktur 25 sind in Figur 5 gezeigt. Die in den Figuren 3 und 4 gezeigte alternative Ausführungsform entspricht mit dem Unterschied, dass die Linse 14' bei dem hier gezeigten Ausführungsbeispiel eine andere Form erhält, der in den Figuren 1 und 2 gezeigten Ausführungsform der Erfindung. Weitere Formänderungen ohne funktionale Änderungen betreffen die Linse 1', den oberen Trägerwafer 9' und den unteren Trägerwafer 18'. Es wird auf die Erläuterung zu Figur 1 und 2 sowie 5 Bezug genommen.

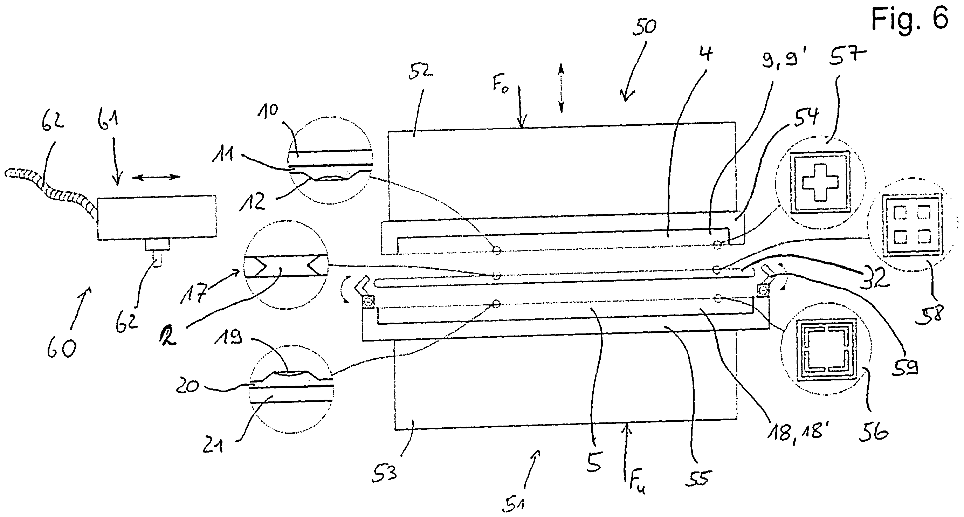

In Figur 6 ist eine Vorrichtung zur Ausübung des erfindungsgemäßen Verfahrens gezeigt mit Aufnahmemitteln 50 zur Aufnahme der eine Vielzahl oberer Linsenstempel 9, 9' aufweisenden oberen Linsenstempelmatrix 4 sowie Aufnahmemitteln 51 zur Aufnahme der eine Vielzahl von unteren Linsenstempeln 18, 18' umfassenden unteren Linsenstempelmatrix 5. Die Aufnahmemittel 50, 51 bestehen jeweils aus einem Chuck 52, 53 und jeweils einer am jeweiligen Chuck 52, 53, beispielsweise über (nicht gezeigte) Vakuumbahnen, angebrachten, im Querschnitt U-förmigen Stempelaufnahme 54, 55.

Die obere und/oder die unteren Aufnahmemittel 50, 51 sind durch eine nicht dargestellte Steuerung Auf und Ab bewegbar.

An der unteren Linsenstempelmatrix 5 sind Ausrichtungsmittel 56 zur Ausrichtung der unteren Linsenstempelmatrix 5 vorgesehen. An der oberen Linsenstempelmatrix 4 sind Ausrichtungsmittel 57 zur Ausrichtung der oberen Linsenstempelmatrix 4 vorgesehen. An der Trägerwafermatrix 32 sind Ausrichtungsmittel 58 zur Ausrichtung der Trägerwafermatrix 32 vorgesehen.

Die Ausrichtungsmittel 56, 57 und/oder 58 umfassen mindestens eine (nicht dargestellte) Optik und sind gesteuert durch eine nicht dargestellte Steuereinheit. Weiterhin umfassen die Ausrichtungsmittel 56, 57 und/oder 58 Bewegungsmittel zur Bewegung der Aufnahmemittel 50 und/oder 51 parallel zur Trägerwafermatrix 32.

Am unteren Aufnahmemittel 51 sind Fixiermittel 59 zur Fixierung der Trägerwafermatrix 32 mit der unteren Linsenstempelmatrix 5 nach Ausrichtung durch die Ausrichtungsmittel 56 vorgesehen.

Weiterhin sind Einbringmittel 60 in Form einer Spritzeneinrichtung 61 mit einer - insbesondere austauschbaren - Spritze 62 vorgesehen, die über eine flexible Fluidleitung 62 mit einem Vorratsbehälter für Linsenmaterial verbunden ist. Die Spritzeneinrichtung 61 ist als Drop Dispenser ausgeführt und kann jede Öffnung 2 der Trägerwaferstruktur anfahren und eine vorgegebene Menge an Linsenmaterial darin einfüllen.

Prägemittel zur Druckbeaufschlagung bewirken eine einstellbare Flächenkraft entlang der Trägerwafermatrix, insbesondere durch entgegengesetzt jeweils in Richtung der Trägerwafermatrix wirkende, an den Ausrichtungsmitteln 50, 51 anliegende Kräfte Fo und Fu, beispielsweise übertragen durch jeweils einen Hydraulikzylinder.

Weiterhin umfasst die Vorrichtung Mittel zum Aushärten des Linsenmaterials beim Prägen, insbesondere eine das Linsenmaterial beaufschlagende UV-Lichtquelle und/oder Heizmittel.

### Verfahren und Vorrichtung zur Herstellung einer Mikrolinse Bezugszeichenliste

- 1: Mikrolinse
- 1': Mikrolinse
- 2: Öffnung
- 3: Linsenraum
- 4: Linsenstempelmatrix
- 5: Linsenstempelmatrix
- 7: Gegenfläche
- 8: Anlagefläche
- 9: oberer Linsenstempel
- 9': oberer Linsenstempel
- 10: Trägersubstrat
- 11: Linsenform
- 12: Linsennegativ
- 14: Linse
- 14': Linse
- 16: Innenring
- 17: Trägerwafer
- 18: unterer Linsenstempel
- 18': unterer Linsenstempel
- 19: Linsennegativ
- 20: Linsenform
- 21: Trägersubstrat
- 22: Anlagefläche
- 23: Gegenfläche
- 24: Außenring
- 25: Haltestruktur
- 31: Mikrolinsenmatrix
- 32: Trägerwaferstruktur/Trägerwafermatrix
- A: optische Achse
- 50: Aufnahmemittel
- 51: Aufnahmemittel
- 52: Chuck
- 53: Chuck
- 54: Stempelaufnahme
- 55: Stempelaufnahme
- 56: Ausrichtungsmittel
- 57: Ausrichtungsmittel
- 58: Ausrichtungsmittel
- 59: Fixiermittel
- 60: Einbringmittel
- 61: Spritzeneinrichtung
- 62: Fluidleitung

## Patentansprüche

1. Verfahren zur Herstellung einer Mikrolinse (1, 1') mit einem Trägerwafer (17), bei dem eine Linse (14, 14') in einer zur Aufnahme der Linse (14, 14') ausgebildeten Öffnung (2) des Trägerwafers (17) durch Prägen der Linse (14, 14') in den Trägerwafer (17) eingeformt wird, **dadurch gekennzeichnet, dass** an einem Innenring (16) des Trägerwafers (17) eine Haltestruktur (25) zur formschlüssigen und nicht zerstörungsfrei lösbaren Fixierung der Linse (14, 14') vorgesehen ist, an welcher die Linse (14, 14') fixiert wird.

2. Verfahren nach Anspruch 1, bei dem der Trägerwafer (17), insbesondere ausschließlich, außerhalb eines Strahlengangs der Mikrolinse (1, 1') angeordnet ist.

3. Verfahren nach einem der vorhergehenden Ansprüche, bei dem beim Prägen gleichzeitig eine Vielzahl von Linsen (14, 14') in korrespondierende Öffnungen (2) einer korrespondierende Trägerwafer (17) umfassenden Trägerwafermatrix (32) eingeformt wird.

4. Verfahren nach einem der vorhergehenden Ansprüche, bei dem beim Prägen Anlageflächen (8, 22) der Linsenstempel (9, 9', 18, 18') zur koplanaren Ausrichtung der Linsenstempel (9, 9', 18, 18') an korrespondierenden Gegenflächen (7, 23) des Trägerwafers (17) anliegen.

5. Verfahren nach einem der Ansprüche 1 bis 3, bei dem beim Prägen eine Anlagefläche (8) des oberen Linsenstempels (9, 9') zur koplanaren Ausrichtung der Linsenstempel (9, 9', 18, 18') an einer korrespondierenden Anlagefläche (22) des Trägerwafers (17) anliegt.

6. Verfahren nach einem der vorhergehenden Ansprüche mit folgendem Ablauf:
- Ausrichtung und Fixierung eines unteren Linsenstempels (18, 18') mit der Öffnung (2)des Trägerwafers (17),
- Einbringung eines die Linse (14, 14') bildenden Linsenmaterials in die Öffnung (2),
- Prägen der Linse (14, 14') durch Beaufschlagung des Linsenmaterials mit einem oberen Linsenstempel (9, 9') und
- Aushärten der Linse (14, 14').

## Claims

1. A method for producing a microlens (1, 1') with a carrier wafer (17), wherein a lens (14, 14') is moulded in an opening (2) of the carrier wafer (17) formed for receiving the lens (14, 14') by stamping the lens (14, 14') into the carrier wafer (17), **characterised in that** there is provided at an inner ring (16) of the carrier wafer (17) a holding structure (25) for the form-fit fixing of the lens (14, 14') that is not releasable without destruction, to which holding structure the lens (14, 14') is fixed.

2. The method according to claim 1, wherein the carrier wafer (17) is arranged, in particular exclusively, outside a beam path of the microlens (1, 1').

3. The method according to any one of the preceding claims, wherein during the stamping, a multiplicity of lenses (14, 14') is moulded simultaneously in corresponding openings (2) of a carrier wafer matrix (32) comprising corresponding carrier wafers (17).

4. The method according to any one of the preceding claims, wherein during the stamping, contact surfaces (8, 22) of the lens dies (9, 9', 18, 18') lie adjacent to corresponding counter-surfaces (7, 23) of the carrier wafer (17) for the co-planar alignment of the lens dies (9, 9', 18, 18').

5. The method according to any one of claims 1 to 3, wherein during the stamping, contact surface (8) of the upper lens die (9, 9') lies adjacent to a corresponding contact surface (22) of the carrier wafer (17) for the co-planar alignment of the lens dies (9, 9', 18, 18').

6. The method according to any one of the preceding claims with the following sequence:
- alignment and fixing of a lower lens die (18, 18') with the opening (2) of the carrier wafer (17),
- introduction of a lens material forming the lens (14, 14') into the opening (2),
- stamping of the lens (14, 14') by acting upon the lens material with an upper lens die (9, 9') and
- curing of the lens (14, 14').

## Revendications

1. Procédé, destiné à produire une microlentille (1, 1') avec une tranche support (17), lors duquel on façonne une lentille (14, 14') dans un orifice (2) de la tranche support (17) conçu pour recevoir la lentille (14, 14') par gaufrage de la lentille (14, 14') dans la tranche support (17), **caractérisé en ce que** sur une bague intérieure (16) de la tranche support (17) est prévue une structure de maintien (25) pour la fixation par complémentarité de forme et non dissociable sans destruction de la lentille (14, 14'), sur laquelle est fixée la lentille (14, 14').

2. Procédé selon la revendication 1, lors duquel la tranche support (17) est placée notamment exclusivement à l'extérieur d'un trajet de faisceau de la microlentille (1, 1').

3. Procédé selon l'une quelconque des revendications précédentes, lors duquel, lors du gaufrage, on façonne simultanément une pluralité de lentilles (14, 14') dans des orifices (2) correspondants d'une matrice de tranches supports (32) comprenant des tranches supports (17) correspondantes.

4. Procédé selon l'une quelconque des revendications précédentes, lors duquel, lors du gaufrage, pour l'alignement coplanaire des poinçons à lentilles (9, 9', 18, 18'), des surfaces d'appui (8, 22) des poinçons à lentilles (9, 9', 18, 18') s'appuient sur des surfaces antagonistes (7, 23) correspondantes de la tranche support (17).

5. Procédé selon l'une quelconque des revendications 1 à 3, lors duquel, lors du gaufrage, pour l'alignement coplanaire des poinçons à lentilles (9, 9', 18, 18'), une surface d'appui (8) du poinçon à lentille supérieur (9, 9') s'appuie sur une surface d'appui (22) correspondante de la tranche support (17).

6. Procédé selon l'une quelconque des revendications précédentes, présentant le déroulement suivant, consistant à :
- aligner et fixer un poinçon à lentille inférieur (18, 18') avec l'orifice (2) de la tranche support (17),
- introduire dans l'orifice (2) une matière à lentille formant la lentille (14, 14'),
- gaufrer la lentille (14, 14') en soumettant la matière à lentille à un poinçon à lentille supérieur (9, 9') et
- faire durcir la lentille (14, 14').
